# EUROPÄISCHE PATENTANMELDUNG

(11) **EP 2 620 688 A2**
(43) Veröffentlichungstag der Anmeldung: **31.07.2013**
(21) Anmeldenummer: 13000384.1
(22) Anmeldetag: 25.01.2013
(51) Int. Cl.: F16L 39/02, H01R 4/60

(54) **Anschlusseinheit für eine Mehrfachkupplung und Mehrfachkupplung mit einer solchen Anschlusseinheit**

(30) Priorität: 27.01.2012 DE 102012001529
(71) Anmelder: Eisele Pneumatics GmbH & Co. KG, 71332 Waiblingen (DE)
(72) Erfinder: Müller, Bernhard, 71397 Leutenbach (DE); Komenda, Stefan, 70734 Fellbach (DE); Bolat, Hakan, 71334 Waiblingen (DE)
(74) Vertreter: Bartels & Partner

(57) **Zusammenfassung**

2. Die Erfindung betrifft eine Anschlusseinheit (10) für eine Vorrichtung (1), insbesondere für eine Mehrfachkupplung, zum steckbaren Verbinden von mehreren ersten Leitungsabschnitten (12) mit jeweils mindestens einem zweiten Leitungsabschnitt (22) durch Zusammenstecken eines ersten Kupplungselements (2), an dem die ersten Leitungsabschnitte (12) angeschlossen sind, mit einem zweiten Kupplungselement (4), an dem die zweiten Leitungsabschnitte (22) angeschlossen sind, wobei die Anschlusseinheit (10) in eine Aufnahmeöffnung (24) eines Grundkörpers (20) des ersten Kupplungselements (2) der Vorrichtung (1) einsetzbar ist, dadurch gekennzeichnet, dass die Anschlusseinheit (10) sowohl einen Anschlussabschnitt (14) für den Anschluss des zugehörigen ersten Leitungsabschnitts (12) als auch einen Verbindungsabschnitt (16) zum Verbinden mit dem zweiten Kupplungselement (4) aufweist, sowie eine Vorrichtung (1), insbesondere eine Mehrfachkupplung, mit mindestens einer solchen Anschlusseinheit (10).

## Beschreibung

Die Erfindung betrifft eine Anschlusseinheit für eine Vorrichtung, insbesondere für eine Mehrfachkupplung, zum steckbaren Verbinden von mehreren ersten Leitungsabschnitten mit jeweils mindestens einem zweiten Leitungsabschnitt durch Zusammenstecken eines ersten Kupplungselements, an dem die ersten Leitungsabschnitte angeschlossen sind, mit einem zweiten Kupplungselement, an dem die zweiten Leitungsabschnitte angeschlossen sind, wobei die Anschlusseinheit in eine Aufnahmeöffnung eines Grundkörpers des ersten Kupplungselements der Vorrichtung einsetzbar ist, sowie eine Vorrichtung, insbesondere eine Mehrfachkupplung, mit mindestens einer solchen Anschlusseinheit.

Aus der DE 10 2010 018 954 A1 ist eine Mehrfachkupplung bekannt, bei der in den Durchgangsöffnungen der Grundkörper der Kupplungselemente einerseits die Spannzangen für den Anschluss der Leitungsabschnitte einsetzbar sind und andererseits Verbindungsmittel zum Verbinden der einander zugeordneten Leitungsabschnitte. Jeder Grundkörper ist an die Abmessungen der anzuschließenden und zu verbindenden Leitungen angepasst, was zwar eine große Typenvielfalt erfordert, aber andererseits ein hohe Betriebssicherheit gewährleistet, weil die Mehrfachkupplung optimal an die anzuschließenden Leitungen angepasst ist.

Der Erfindung liegt die Aufgabe zugrunde, eine Anschlusseinheit und eine zugehörige Vorrichtung, insbesondere Mehrfachkupplung, bereitzustellen, welche die Nachteile des Standes der Technik überwinden, insbesondere dauerhaft zuverlässig eine Verbindung der einander zugeordneten Leitungsabschnitte gewährleisten. In einer Ausführungsart soll der Zusammenbau der Vorrichtung vereinfacht sein, und dabei insbesondere möglichst schnell an spezifische Kundenwünsche anpassbar sein.

Das Problem ist durch die im Anspruch 1 bestimmte Anschlusseinheit und durch die im nebengeordneten Anspruch bestimmte Vorrichtung gelöst. Besondere Ausführungsarten der Erfindung sind in den Unteransprüchen besti m mt.

In einer Ausführungsart ist die Aufgabe gelöst durch eine Vorrichtung, bei welcher die Anschlusseinheit sowohl einen Anschlussabschnitt für den Anschluss des zugehörigen ersten Leitungsabschnitts als auch einen Verbindungsabschnitt zum Verbinden mit dem zweiten Kupplungselement aufweist. Die Anschlusseinheit weist somit sowohl Anschlussmittel für den Anschluss des ersten Leitungsabschnitts auf als auch Verbindungsmittel zum Verbinden mit dem zweiten Kupplungselement, vorzugsweise mit dem Verbindungsabschnitt einer gleichartigen Anschlusseinheit des zweiten Kupplungselements. Die Anschlusseinheit erstreckt sich somit durch den gesamten Grundkörper hindurch und ragt insbesondere von einem dem anzuschließenden ersten Leitungsabschnitt zugewandten Ende des Grundkörpers bis zu einem dem zweiten Kupplungselement, insbesondere einem Grundkörper des zweiten Kupplungselements, zugewandten Ende des ersten Kupplungselements und kann an einem oder beiden Enden über den Grundkörper auch hinausragen.

Die Anschlusseinheit kann in der Art einer Anschlusspatrone in die dafür vorgesehene Aufnahmeöffnung des Grundkörpers einsetzbar sein.
Die Anschlusseinheit ist vorzugsweise als eine sowohl den Anschlussabschnitt als auch den Verbindungsabschnitt umfassende Baueinheit in die Aufnahmeöffnung des Grundkörpers einsetzbar.
Die Verbindung der Anschlusseinheit mit dem zugehörigen Leitungsabschnitt kann erst nach dem Einsetzen der Anschlusseinheit in den Grundkörper erfolgen, d.h. die Anschlusseinheit ist leitungsabschnittsfrei in den Grundkörper einsetzbar. Eine Anpassung der Anschlusseinheit an den anzuschließenden ersten Leitungsabschnitt, insbesondere hinsichtlich des Außendurchmessers des ersten Leitungsabschnitts, erfolgt durch eine geeignete Auswahl des Anschlussabschnitts der Anschlusseinheit und erfordert insbesondere keine Anpassung oder Veränderung an dem Grundkörper des Kupplungselements. Vielmehr können unterschiedliche Leitungsabschnitte, insbesondere unterschiedlich große Leitungsabschnitte, an einen einheitlichen Grundkörper angeschlossen werden, indem an die anzuschließenden Leitungsabschnitte angepasste Anschlusseinheiten, insbesondere Anschlusseinheiten mit an die anzuschließenden Leitungsabschnitte angepassten Anschlussabschnitten, in die Aufnahmeöffnungen des Grundkörpers einsetzbar sind.

Die unterschiedlich ausgestalteten Anschlusseinheiten bilden eine Art Baukastensystem, aus dem eine für den jeweils anzuschließenden Leitungsabschnitt geeignete Anschlusseinheit auswählbar ist und in den einheitlichen Grundkörper eingesetzt wird. Dadurch kann die Mehrfachkupplung ohne konstruktive Änderungen insbesondere am Grundkörper sehr schnell an individuelle Kundenwünsche angepasst werden.

In einer Ausführungsart sind Anschlusseinheiten für unterschiedliche Abmessungen der ersten Leitungsabschnitte wahlweise in die eine oder in die andere Aufnahmeöffnung des Grundkörpers einsetzbar. So können Anschlusseinheiten zum Anschließen von Leitungsabschnitten mit einem Außendurchmesser von beispielsweise 4, 6 oder 8 mm entsprechend den Kundenanforderungen ausgewählt werden und wahlweise in die vorgesehenen Aufnahmeöffnungen des Grundköpers eingesetzt werden. Mehrere Aufnahmeöffnungen des Grundkörpers können hierzu gleichartig ausgestaltet sein, insbesondere noch keine Individualisierung hinsichtlich des Durchmessers des anzuschließenden Leitungsabschnittes aufweisen.

In einer Ausführungsart weisen Anschlusseinheiten für unterschiedliche Abmessungen der ersten Leitungsabschnitte mindestens abschnittsweise übereinstimmende Außenabmessungen auf. Dadurch passen Anschlusseinheiten für unterschiedliche Abmessungen der ersten Leitungsabschnitte in einheitlich ausgestaltete Aufnahmeöffnungen des Grundkörpers. Die Anschlusseinheiten können die übereinstimmenden Außenabmessungen insbesondere im Verbindungsabschnitt aufweisen, mit dem die jeweilige Anschlusseinheit in Anlage an dem Grundkörper ist. Alternativ hierzu können Adapterelemente vorgesehen sein, um Anschlusseinheiten, die nicht in die einheitlich ausgestalteten Aufnahmeöffnungen des Grundkörpers passen, mittels eines Adapterelements an dem Grundkörper festzulegen. Das Adapterelement kann mindestens abschnittsweise hülsenförmig sein und/oder mindestens abschnittsweise Außenabmessungen aufweisen, welche an die übereinstimmenden Außenabmessungen der an dem Grundkörper festlegbaren Anschlusseinheiten angepasst oder diesen nachgebildet sind. In einer Ausführungsart sind der Anschlussabschnitt und der Verbindungsabschnitt der Anschlusseinheit durch separate Elemente gebildet, die fest miteinander aber vorzugsweise lösbar verbunden sind. Die Verbindung ist vorzugsweise fluiddicht. Beispielsweise können der Anschlussabschnitt und der Verbindungsabschnitt miteinander verschraubt sein. Hierzu können der Anschlussabschnitt und der Verbindungsabschnitt miteinander korrespondierende Außen- bzw. Innengewinde aufweisen. Beispielsweise kann der Verbindungsabschnitt ein Außengewinde aufweisen, wohingegen der Anschlussabschnitt ein Innengewinde aufweist. Die Verschraubung kann durch eine Verklebung gesichert sein, insbesondere durch Verkleben der Gewindeabschnitte des Anschlussabschnitts einerseits und des Verbindungsabschnitts andererseits. In einer alternativen Ausführungsart der Erfindung ist der Anschlussabschnitt mit dem Verbindungsabschnitt verpresst, insbesondere kann der Anschlussabschnitt in eine endseitige Öffnung des Verbindungsabschnitts eingepresst sein oder umgekehrt.

Am Übergang zwischen Anschlussabschnitt und Verbindungsabschnitt kann die Anschlusseinheit einen radialen Vorsprung aufweisen, insbesondere eine flanschartige Verbreiterung, mit dem sich die Anschlusseinheit im Grundkörper des Kupplungselements abstützt und dadurch in axialer Richtung definiert positioniert ist. Der radiale Vorsprung kann insbesondere im Anschlussabschnitt der Anschlusseinheit ausgebildet sein.

Durch die Verwendung separater Anschluss- und Verbindungsabschnitte kann die Individualisierung und Anpassung der Anschlusseinheit an die anzuschließenden Leitungsabschnitte durch die Anschlussabschnitte erfolgen, wohingegen für die Verbindungsabschnitte gleichartige Elemente einsetzbar sind, die an die einheitlichen Aufnahmeöffnungen im Grundkörper angepasst sind. Dadurch ergibt sich eine weitere Reduktion der erforderlichen Teilevielfalt.

In einer Ausführungsart weist die Anschlusseinheit auf ihrer Außenumfangsfläche abschnittsweise eine von der Zylinderform abweichende Form auf, mittels welcher die Anschlusseinheit in dem Grundkörper fixierbar ist. Die von der Zylinderform abweichende Form kann die Anschlusseinheit auf ihrer Außenumfangsfläche aufweisen, beispielsweise durch eine umlaufende Nut. In diese Nut ist ein Sicherungselement einsetzbar, welches die Anschlusseinheit hinsichtlich ihrer axialen Position in dem Grundkörper fixiert, beispielsweise durch Anlage an einem entsprechenden Absatz in der Aufnahmeöffnung des Grundkörpers. Das Sicherungselement kann beispielsweise durch einen Federring gebildet sein.

Die Anschlusseinheit kann insbesondere von einer dem anzuschließenden Leitungsabschnitt zugewandten Seite, insbesondere der Außenseite der Vorrichtung, in den Grundkörper einsteckbar sein, und das Sicherungselement kann von der dem anzuschließenden Leitungsabschnitt gegenüberliegenden Seite des Grundkörpers, insbesondere der Innenseite der Vorrichtung, in die Nut der Anschlusseinheit einsetzbar sein und dadurch die Anschlusseinheit an dem Grundkörper festlegen. In einer alternativen Ausführungsart kann die Anschlusseinheit von einer dem anzuschließenden Leitungsabschnitt abgewandten Seite, insbesondere der Innenseite der Vorrichtung, in den Grundkörper einsteckbar sein, und das Sicherungselement kann von der dem anzuschließenden Leitungsabschnitt zugewandten Seite des Grundkörpers, insbesondere der Außenseite der Vorrichtung, in die Nut der Anschlusseinheit einsetzbar sein und dadurch die Anschlusseinheit an dem Grundkörper festlegen.

In einer Ausführungsart weist der Anschlussabschnitt eine Aufnahmeöffnung für eine den zugehörigen Leitungsabschnitt lösbar fixierende Einrichtung auf. Beispielsweise kann in die Aufnahmeöffnung eine Spannzange eingesetzt werden, deren Abmessung an die Außenabmessung des anzuschließenden Leitungsabschnitts angepasst ist. Dadurch kann durch die Wahl einer von mehreren, hinsichtlich ihrer Abmessungen unterschiedlich ausgestalteter Spannzangen eine Anpassung der Anschlusseinheit an die Abmessung des anzuschließenden Leitungsabschnitts vorgenommen werden. Die Aufnahmeöffnung im Anschlussabschnitt kann dabei an die Größe der einzusetzenden Einrichtung bzw. Spannzange angepasst sein.

In einer Ausführungsart weist die Anschlusseinheit ein beim Zusammenstecken der Kupplungselemente vorzugsweise automatisch betätigbares Ventil auf. Der Ventilsitz kann dabei im Verbindungsabschnitt der Anschlusseinheit angeordnet sein. Die Ventilfeder kann sich im Anschlussabschnitt der Anschlusseinheit abstützen. Der Ventilkörper kann in der Anschlusseinheit geführt sein, insbesondere im Verbindungsabschnitt der Anschlusseinheit. Da die Verbindungsabschnitte nicht an die Abmessung des anzuschließenden Leitungsabschnitts angepasst ist, können auch einheitliche Ventilkörper verwendet werden.

Die Erfindung betrifft auch eine Vorrichtung, insbesondere eine Mehrfachkupplung, zum gleichzeitigen Steckverbinden von mehreren ersten Leitungsabschnitten mit jeweils mindestens einem zweiten Leitungsabschnitt durch Zusammenstecken eines ersten Kupplungselements, an dem die ersten Leitungsabschnitte angeschlossen sind, mit einem zweiten Kupplungselement, an dem die zweiten Leitungsabschnitte angeschlossen sind. Mindestens das erste Kupplungselement, vorzugsweise sowohl das erste als auch das zweite Kupplungselement, weisen einen Grundkörper mit Durchgangsöffnungen auf. Mindestens in einem Teil der Durchgangsöffnungen sind Anschlusseinheiten einsetzbar, die sowohl einen Anschlussabschnitt für den Anschluss des zugehörigen ersten Leitungsabschnitts als auch einen Verbindungsabschnitt zum Verbinden mit dem zweiten Kupplungselement aufweisen, insbesondere zum Verbinden mit einem Leitungsabschnitt einer Anschlusseinheit in einem Grundkörper des zweiten Kupplungselements.

Ausgehend von einem Grundkörper mit mehreren gleichartig ausgebildeten Aufnahmeöffnungen und einem Baukastensystem von Anschlusseinheiten, die zwar einerseits an die einheitlichen Durchgangsöffnungen im Grundkörper angepasst sind, andererseits aber den Anschluss von Leitungsabschnitten unterschiedlicher Abmessungen, insbesondere Außendurchmesser, erlauben, kann schnell und auf einfache Weise eine Mehrfachkupplung entsprechend den Kundenwünschen hergestellt werden, indem geeignete Anschlusseinheiten in die Durchgangsöffnungen des Grundkörpers eingesetzt werden. Nicht benötigte Verbindungsstellen können dabei an einem oder an beiden Grundkörpern durch vorzugsweise lösbar in den Grundkörper einsetzbare Blindstopfen verschlossen werden.

In einer Ausführungsart weist der Grundkörper in der Durchgangsöffnung einen ersten Absatz auf, an dem die eingesetzte Anschlusseinheit in Anlage ist. Dadurch ist die axiale Position der Anschlusseinheit in dem Grundkörper vorgegeben. Vorzugsweise weist der Grundkörper in der Durchgangsöffnung einen zweiten Absatz auf, an dem ein die Anschlusseinheit in axialer Richtung fixierendes Sicherungselement in Anlage ist. Dadurch ist die Anschlusseinheit in der vorgegebenen axialen Position fixierbar, vorzugsweise aber noch drehbar. Das Sicherungselement kann beispielsweise durch einen federnden Sicherungsring gebildet sein. Das Sicherungselement kann lösbar sein, so dass erforderlichenfalls eine oder mehrere Anschlusseinheiten aus dem Grundkörper entfernt und durch andere Anschlusseinheiten ersetzt werden können, beispielsweise wenn ein Leitungsabschnitt mit einem größeren oder kleineren Außendurchmesser angeschlossen werden soll.

In einer besonderen Ausführungsart weist die Anschlusseinheit, insbesondere im Anschlussabschnitt, ein vorzugsweise ringförmiges Sicherungselement auf, insbesondere ein federelastisch verformbares Sicherungselement, beispielsweise einen Dichtring, der in eine Ringnut auf der Außenseite der Anschlusseinheit, insbesondere des Anschlussabschnitts, eingesetzt ist. Die Anschlusseinheit weist, insbesondere im Verbindungsabschnitt, ein vorzugsweise einstückig von der Anschlusseinheit ausgebildetes Anschlagelement auf, insbesondere einen ringförmigen Flansch, der beim Einsetzen der Anschlusseinheit an den Grundkörper in Anlage kommt und dadurch einen Anschlag für das Einsetzen der Anschlusseinheit in den Grundkörper bildet.

Die Anschlusseinheit kann von einer dem anzuschließenden Leitungsabschnitt abgewandten Seite, insbesondere der Innenseite der Vorrichtung, mit dem vorauseilenden Anschlussabschnitt und dem Sicherungselement in die dafür vorgesehene Durchgangsöffnung des Grundkörpers einsteckbar sein, bis die Anschlusseinheit mit ihrem Anschlagelement in Anlage an den Grundkörper kommt. Mithin ist die Anschlusseinheit von der Innenseite der Vorrichtung in den Grundkörper einsteckbar. Durch einen auf der Innenseite vorhandenen Überdruck ist das Anschlagelement und damit die Anschlusseinheit formschlüssig in sicherer Anlage an dem Grundkörper gehalten und dadurch positioniert und fixiert.

Der Grundkörper kann auf seiner dem Anschlagelement der Anschlusseinheit zugewandten Oberfläche eine erste Fase und/oder Verrundung aufweisen, beispielsweise eine Fase, die mit der Längsachse der Anschlusseinheit oder der Steckrichtung einen Winkel von weniger als 45°, insbesondere weniger als 35° und vorzugsweise weniger als 30° einschließt, zum schonenden Einführen insbesondere des Sicherungselements in die Durchgangsöffnung; das Anschlagelement kann auf seiner dem Grundkörper zugewandten Oberfläche eine entsprechende Fase und/oder Verrundung aufweisen.

Im weiteren Verlauf, insbesondere anschließend an die erste Fase und/oder Verrundung, weist die Durchgangsöffnung des Grundkörpers einen vorzugsweise zylindrischen und insbesondere kreiszylindrischen Abschnitt auf, dessen lichte Weite mit den Außenabmessungen der Anschlusseinheit übereinstimmt, insbesondere mit den Außenabmessungen des Verbindungsabschnitts, aber geringer ist als die Außenabmessung des Sicherungselements im unverformten Zustand. Dementsprechend wird das Sicherungselement beim Einsetzen der Anschlusseinheit federelastisch verformt.

Im weiteren Verlauf, insbesondere an den zylindrischen Abschnitt anschließend, weist die Durchgangsöffnung eine Aufweitung auf, insbesondere mittels einer zweiten Fase und/oder Verrundung, in welche das Anlagemittel eingreift oder einrastet, wenn die Anschlusseinheit vollständig in den Grundkörper eingesetzt ist, und dadurch die Anschlusseinheit in dem Grundkörper fixiert, insbesondere lösbar fixiert. Ein besonderer Vorteil dieser Ausführungsart besteht darin, dass die Anschlusseinheit einfach und vorzugsweise sogar werkzeuglos von dem Grundkörper lösbar ist. Dadurch kann ein Monteur auch unmittelbar am Einsatzort der Vorrichtung auf einfache Weise die erforderlichen Anschlusseinheiten in den Grundkörper einsetzen oder bei Bedarf austauschen. Die zweite Fase kann mit der Längsachse der Anschlusseinheit oder der Steckrichtung einen Winkel von mehr als 40° einschließen, insbesondere mehr als 45° und vorzugsweise mehr als 50°, und weniger als 90°, insbesondere weniger als 80° und vorzugsweise weniger als 70°, um eine sichere Festlegung der Anschlusseinheit am Grundkörper und/oder ein einfaches Entnehmen der Anschlusseinheit von dem Grundkörper zu gewährleisten.

In einer Ausführungsart sind in den Grundkörper Anschlusseinrichtungen für mindestens zwei unterschiedliche Medien einsetzbar, beispielsweise für Druckluft einerseits und für elektrische Leitungen andererseits.
Die Mehrfachkupplung ist dadurch gleichzeitig auch eine Mehrmedienkupplung. Die Anschlusseinheiten für die unterschiedlichen Medien können dabei gleichzeitig oder in einer vorgebbaren Reihenfolge beim Zusammenstecken der Kupplungselemente miteinander verbunden werden. Beispielsweise können Anschlusseinheiten für elektrische Verbindungen beim Zusammenstecken vor den Anschlusseinheiten für Fluide miteinander in Verbindung kommen, um dadurch einen Schutz der elektrischen Verbindung zu gewährleisten.

Bei den elektrischen Verbindungen kann es sich beispielsweise um elektrische Sensorleitungen, Datenleitungen oder Energieversorgungsleitungen handeln. Die Aufnahmeöffnungen im Grundkörper für Anschlusseinheiten eines ersten Mediums können sich von den Aufnahmeöffnungen für Anschlusseinheiten eines zweiten Mediums unterscheiden. Die Anschlusseinheiten für ein erstes Medium können sich von den Anschlusseinheiten für ein zweites Medium unterscheiden, beispielsweise kann der Durchmesser der Anschlusseinheiten und der zugehörigen Aufnahmeöffnung im Grundkörper für ein erstes Medium größer sein als der Außendurchmesser der Anschlusseinheiten für ein zweites Medium.

Weitere Vorteile, Merkmale und Einzelheiten der Erfindung ergeben sich aus den Unteransprüchen sowie der nachfolgenden Beschreibung, in der unter Bezugnahme auf die Zeichnung mehrere Ausführungsbeispiele im Einzelnen beschrieben sind. Dabei können die in den Ansprüchen und in der Beschreibung erwähnten Merkmale jeweils einzeln für sich oder in beliebiger Kombination erfindungswesentlich sein.
- Fig. 1: zeigt eine perspektivische Ansicht eines Ausführungsbeispiels eines ersten Kupplungselements einer erfindungsgemäßen Vorrichtung,
- Fig. 2: zeigt eine perspektivische Ansicht eines zweiten Kupplungselements,
- Fig. 3: zeigt eine perspektivische Ansicht der Vorrichtung,
- Fig. 4: zeigt einen Schnitt durch die Vorrichtung im zusammengesteckten Zustand der Fig. 3,
- Fig. 5: zeigt eine Draufsicht auf den ersten Grundkörper,
- Fig. 6: zeigt einen Schnitt durch den ersten Grundkörper der Fig. 5,
- Fig. 7: zeigt einen Schnitt durch ein Ausführungsbeispiel einer Anschlusseinheit,
- Fig. 8: zeigt einen Schnitt durch ein weiteres Ausführungsbeispiel einer Anschlusseinheit,
- Fig. 9: zeigt eine Draufsicht auf den zweiten Grundkörper,
- Fig. 10: zeigt einen Schnitt durch den zweiten Grundkörper der Fig. 9,
- Fig. 11: zeigt einen Schnitt durch ein Ausführungsbeispiel einer Anschlusseinheit,
- Fig. 12: zeigt einen Schnitt durch ein weiteres Ausführungsbeispiel einer Anschlusseinheit,
- Fig. 13: zeigt ei nen Schnitt durch ein weiteres Ausführungsbeispiel einer Anschlusseinheit,
- Fig. 14: zeigt in vergrößerter Darstellung den Ausschnitt XIV der Fig. 13, und
- Fig. 15: zeigt in vergrößerter Darstellung den Ausschnitt XV der Fig. 13.

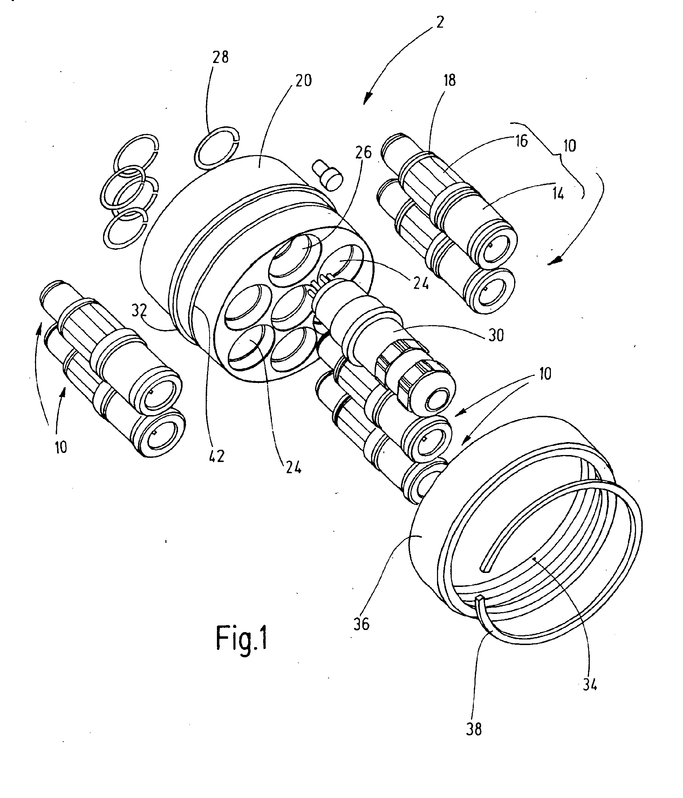

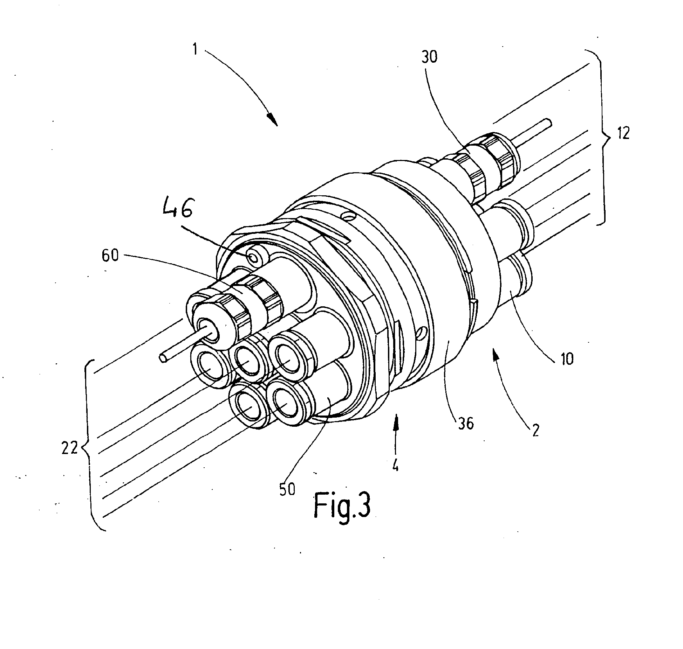

Die Fig. 1 zeigt eine perspektivische Ansicht auf ein Ausführungsbeispiel eines ersten Kupplungselements 2 einer erfindungsgemäßen Vorrichtung 1 (Fig. 3) zum gleichzeitigen Steckverbinden von mehreren ersten Leitungsabschnitten 12 mit jeweils mindestens einem zweiten Leitungsabschnitt 22 durch Zusammenstecken des ersten Kupplungselements 2, an dem die ersten Leitungsabschnitte 12 angeschlossen sind, mit einem zweiten Kupplungselement 4, an dem die zweiten Leitungsabschnitte 22 angeschlossen sind.

Das erste Kupplungselement 2 weist einen ersten Grundkörper 20 mit Durchgangsöffnungen 24, 26 auf. Im Ausführungsbeispiel weist der erste Grundkörper 20 insgesamt sechs Durchgangsöffnungen 24 eines ersten Typs auf, in welche jeweils eine Anschlusseinheit 10 vom ersten Typ einsetzbar ist. Die Durchgangsöffnungen 24 des ersten Typs sind dabei identisch ausgebildet. Die Anschlusseinheiten 10 weisen einen Anschlussabschnitt 14 für den Anschluss des zugehörigen ersten Leitungsabschnitts 12 auf und einen Verbindungsabschnitt 16 zum Verbinden mit dem zweiten Kupplungselement 4.

Im Ausführungsbeispiel der Fig. 1 sind alle sechs dargestellten Anschlusseinheiten 10 identisch aufgebaut, insbesondere für den Anschluss von ersten Leitungsabschnitten 12 mit übereinstimmendem Leitungsdurchmesser ausgebildet. Es wäre jedoch auch möglich, Anschlusseinheiten 10 in den ersten Grundkörper 20 einzusetzen, die in ihrem Anschlussabschnitt 14 unterschiedlich ausgestaltet sind, um erste Leitungsabschnitte 12 mit unterschiedlichen Abmessungen anschließen zu können, beispielsweise Schläuche mit einem Außendurchmesser von 4, 6 oder 8 mm. Demgegenüber sind die Verbindungsabschnitte 16 der Anschlusseinheiten 10 unabhängig von den Abmessungen der ersten Leitungsabschnitte 12 und damit unabhängig von den Abmessungen des Anschlussabschnitts 14 identisch ausgebildet und an die Durchgangsöffnung 24 der ersten Art angepasst.

Die Anschlusseinheiten 10 werden von einer Seite in den ersten Grundkörper 20 eingesetzt und weisen im Verbindungsabschnitt 16 abschnittsweise eine von der Zylinderform abschnittsweise abweichende Außenkontur auf, im Ausführungsbeispiel eine umlaufende Nut 18. In die Nut 18 ist von der gegenüberliegenden Seite des ersten Grundkörpers 20 ein Sicherungselement 28 einsetzbar, im Ausführungsbeispiel ein Federring, wodurch die Anschlusseinheit 10 innerhalb des Grundkörpers 20 in axialer Richtung fixiert ist.

Neben den Durchgangsöffnungen 24 vom ersten Typ weist der erste Grundkörper 20 auch eine Durchgangsöffnung 26 vom zweiten Typ auf, in welche eine Anschlusseinheit 30 vom zweiten Typ einsetzbar ist, im Ausführungsbeispiel eine Anschlusseinheit 30 zum Verbinden elektrischer Leitungen, beispielsweise Sensorleitungen. Die Anschlusseinheit 30 kann dabei entsprechend den Kundenwünschen mehrpolig ausgebildet sein. In einem alternativen Ausführungsbeispiel könnten in dem ersten Grundkörper 20 auch mehrere Durchgangsöffnungen 26 vom zweiten Typ vorgesehen sein, und dementsprechend mehrere Anschlusseinheiten 30 in den ersten Grundkörper 20 einsetzbar sein, beispielsweise sofern sowohl Signal- oder Datenleitungen einerseits als auch Energieversorgungsleitungen andererseits mittels der Vorrichtung 1 durch separate Anschlusseinheiten 30 verbindbar sind.

Der erste Gründkörper 20 weist einen Außenflansch 32 auf, an den eine ein Innengewinde 34 aufweisende Überwurfmutter 36 in Anlage bringbar ist, die mit einem zweiten Grundkörper 40 des zweiten Kupplungselements 4 verschraubbar ist und dadurch der verbundene Zustand der beiden Kupplungselemente 2, 4 fixierbar ist. Die Überwurfmutter 36 ist an dem Grundkörper 20 mittels eines Sicherungselements 38 festlegbar, im Ausführungsbeispiel mittels eines Federrings, der in eine auf der Außenfläche des ersten Grundkörpers 20 angebrachte Nut 42 eingreift.

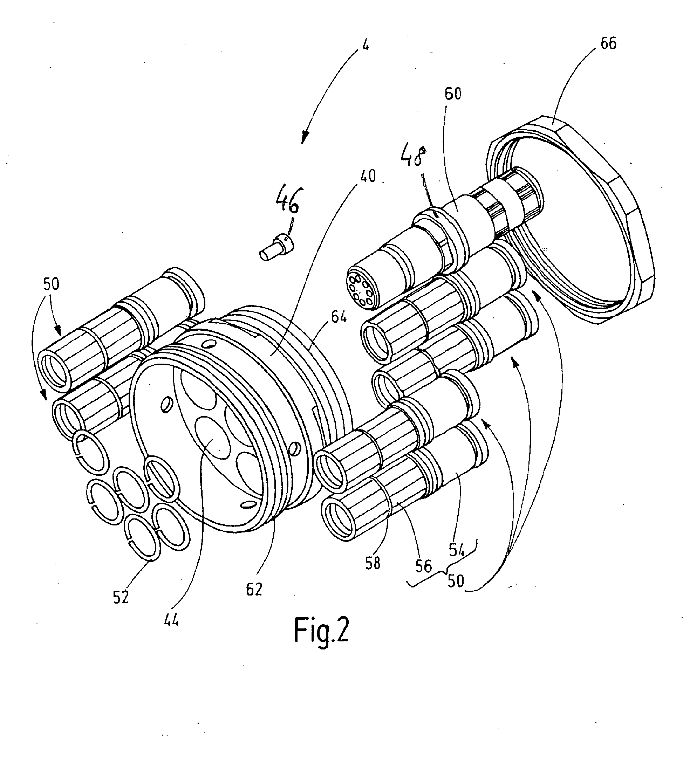

Die Fig. 2 zeigt eine perspektivische Ansicht auf ein Ausführungsbeispiel eines zu dem ersten Kupplungselement 2 der Fig. 1 passenden zweiten Kupplungselements 4 im auseinandergebauten Zustand. Das zweite Kupplungselement 4 weist einen zweiten Grundkörper 40 auf, mit insgesamt sechs Durchgangsöffnungen 44 einer ersten Art zum Einsetzen von Anschlusseinheiten 50, die jeweils einen Anschlussabschnitt 54 zum Anschluss eines zweiten Leitungsabschnitts 22 aufweisen und einen Verbindungsabschnitt 56 zum Verbinden mit dem ersten Kupplungselement 2.

Im Bereich der Verbindungsabschnitte 56 weisen die Anschlusseinheiten 50 eine von der Zylinderform abweichende Form auf, insbesondere eine Nut 58, in die ein Sicherungselement 52, im Ausführungsbeispiel ein Federring, einsetzbar ist und dadurch die Anschlusseinheit 50 in dem zweiten Grundkörper 40 fixiert. Neben den Anschlusseinheiten 50 für den Anschluss von beispielsweise Fluidleitungen weist das zweite Kupplungselement 4 auch noch eine Anschlusseinheit 60 für eine elektrische Steckverbindung mit der Anschlusseinheit 30 des ersten Kupplungselements 2 auf. Die Anschlusseinheit 60 ist in eine in der Fig. 2 nicht sichtbare Durchgangsöffnung im zweiten Grundkörper 40 einsetzbar, die sich hinsichtlich ihrer Abmessungen von den Durchgangsöffnungen 44 unterscheiden kann, und mit einem Befestigungsmittel 46, beispielsweise einer Schraube, an dem zweiten Grundkörper 40 festlegbar, beispielsweise durch Anlage an einem flanschartigen Befestigungsabschnitt 48.

Auf seiner Außenfläche weist der zweite Grundkörper 40 an oder nahe beiden axialen Elementen jeweils ein Außengewinde 62, 64 auf. Auf das erste Außengewinde 62 ist die Überwurfmutter 36 des ersten Kupplungselements 2 aufschraubbar. Auf das zweite Außengewinde 64 ist die Mutter 66 aufschraubbar, mittels welcher das zweite Kupplungselement 4 beispielsweise an einer Schottwand festlegbar ist.

Die Fig. 3 zeigt eine perspektivische Ansicht der Vorrichtung 1 mit dem ersten Kupplungselement 2 und dem zweiten Kupplungselement 4 sowie den darin eingesetzten Anschlusseinheiten 10, 30, 50, 60. Über die ersten und zweiten Leitungsabschnitte 12, 22 können beispielsweise Druckluft- oder Flüssigkeitsleitungen miteinander verbunden werden. Über die Anschlusseinheiten 30, 60 können elektrische Leitungsabschnitte miteinander verbindbar sind. In der Fig. 3 ist der zusammengesteckte und mittels der Überwurfmutter 36 gesicherte Zustand der Vorrichtung 1 dargestellt. Im Ausführungsbeispiel trägt das erste Kupplungselement 2 steckerförmige Anschlusseinheiten 10, 30, wohingegen das zweite Kupplungselement 4 buchsenförmige Anschlusseinheiten 50, 60 aufweist.

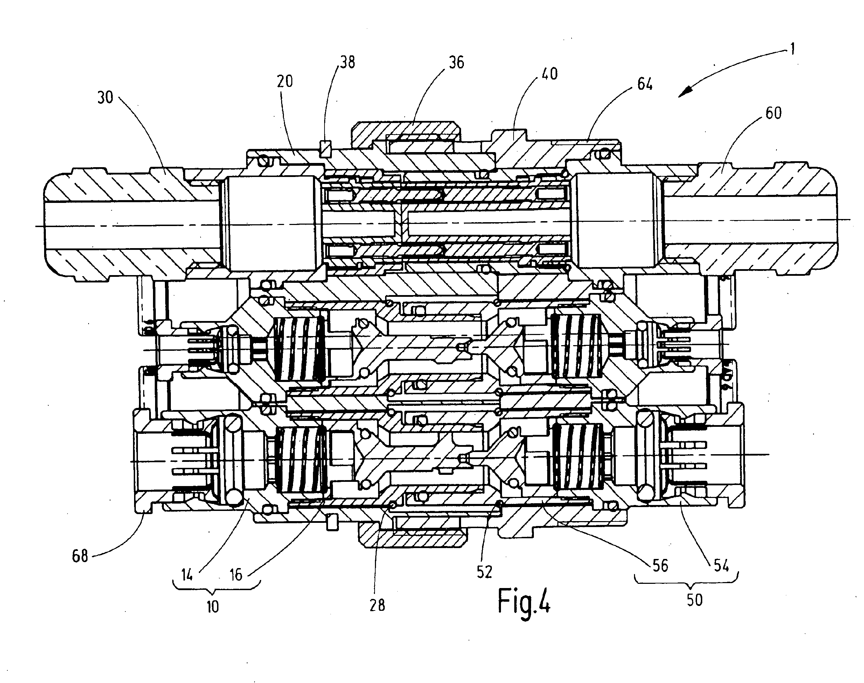

Die Fig. 4 zeigt einen Schnitt durch die Vorrichtung 1 im zusammengesteckten Zustand der Fig. 3.

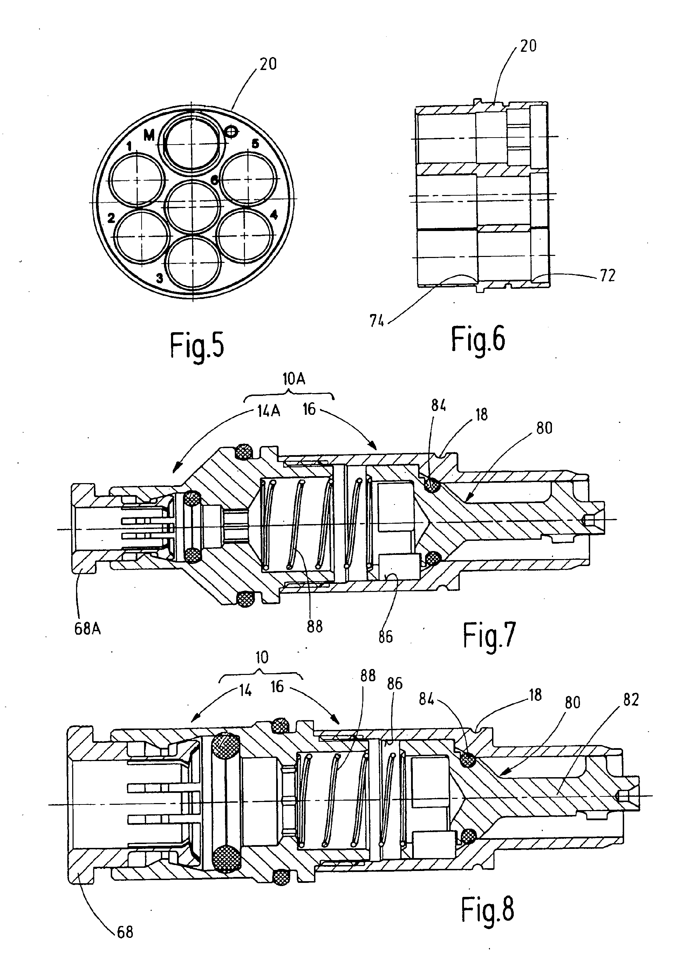

Die Fig. 5 zeigt eine Draufsicht auf den ersten Grundkörper 20.
Die Fig. 6 zeigt einen Schnitt durch den ersten Grundkörper 20 der Fig. 5.
Die Fig. 7 zeigt einen Schnitt durch eine Anschlusseinheit 10A, die sich von dem in der Fig. 8 im Schnitt dargestellten Ausführungsbeispiel der Anschlusseinheit 10 durch die Größe der Spannzange 68A unterscheidet sowie durch die Ausgestaltung der Aufnahmeöffnung des Anschlussabschnitts 14A für die Spannzange 68A.

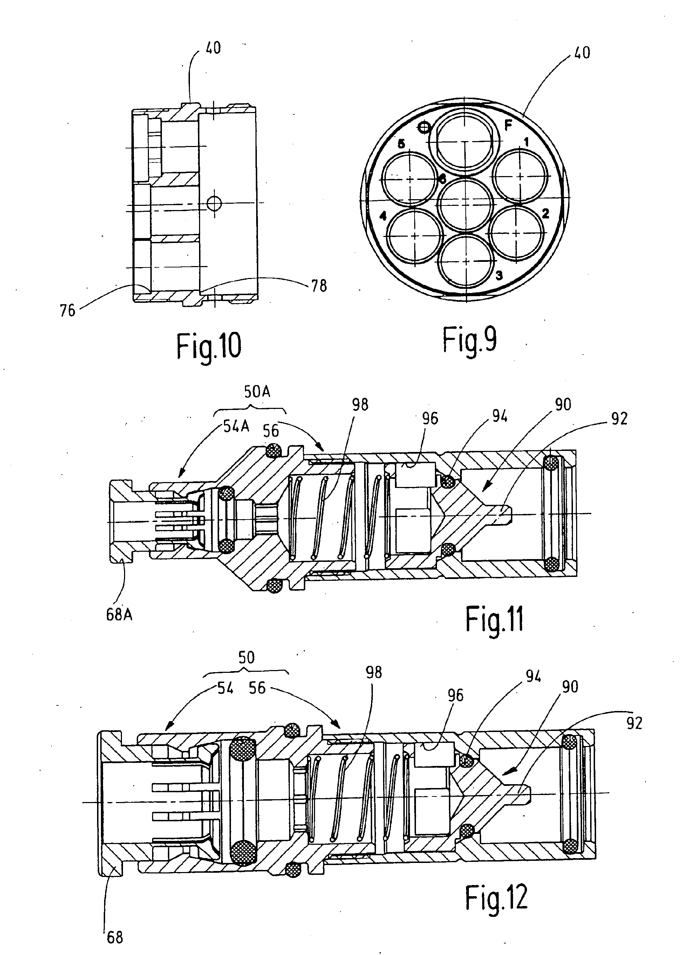

Die Fig. 9 zeigt eine Ansicht auf den zweiten Grundkörper 40.
Die Fig. 10 einen Schnitt durch den zweiten Grundkörper 40 der Fig. 9.
Die Fig. 11 zeigt einen Schnitt durch ein Ausführungsbeispiel einer Anschlusseinheit 50A, die sich von der in der Fig. 12 im Schnitt dargestellten Anschlusseinheit 50 durch die Größe der Spannzange 68A sowie durch die Größe der Aufnahmeöffnung im Anschlussabschnitt 54A unterscheidet.

In der linken Bildhälfte der Fig. 4 sind die steckerförmigen Anschlusseinheiten 10, 30 des ersten Kupplungselements 2 angeordnet, während in der rechten Bildhälfte die buchsenförmigen Anschlusseinheiten 50, 60 des zweiten Kupplungselements 4 angeordnet sind.
Der Anschlussabschnitt 14 einer Anschlusseinheit 10 weist eine Aufnahmeöffnung für eine den zugehörigen Leitungsabschnitt lösbar fixierende Einrichtung 68 auf, im Ausführungsbeispiel für eine in die Aufnahmeöffnung einsetzbare Spannzange. Entsprechendes gilt für den Anschlussabschnitt 54 der Anschlusseinheit 50. In die einander zugeordneten Anschlusseinheiten 10, 50 sind erste und zweite Leitungsabschnitte mit übereinstimmendem Außendurchmesser einsetzbar, im Ausführungsbeispiel in die Anschlusseinheiten 10, 50 in der unteren Bildhälfte Schlauchleitungen mit einem Außendurchmesser von 8 mm.
In die Anschlusseinheiten 10, 50 in der Bildmitte der Fig. 4 sind dagegen Schlauchleitungen mit einem Außendurchmesser von 4 mm einsetzbar.

An der Verbindungsstelle zwischen Anschlussabschnitt 14 und Verbindungsabschnitt 16 weist die Anschlusseinheit 10 auf der Außenumfangsfläche einen Absatz auf, insbesondere eine flanschartige Verbreiterung, die in Anlage an einem zugehörigen ersten Absatz 72 des ersten Grundkörpers 20 ist (Fig. 6), wodurch die Anschlusseinheit 10 in einer vorgebbaren Position in Bezug auf den ersten Grundkörper 20 ist.
In dieser Position ist die Anschlusseinheit 10 durch das in die Nut 18 eingesetzte Sicherungselement 28 gesichert, das sich an einem dafür vorgesehenen zweiten Absatz 74 des ersten Grundkörpers 20 abstützt.

Die Anschlusseinheit 50 des zweiten Kupplungselements 4 weist an der Übergangsstelle zwischen dem Anschlussabschnitt 54 und dem Verbindungsabschnitt 56 eine flanschartige Verbreiterung auf, die in Anlage an einem ersten Absatz 76 des zweiten Grundkörpers 40 ist (Fig. 10) und dadurch in einer definierten axialen Position. In dieser Position wird die Anschlusseinheit 50 durch das in die Nut 58 eingesetzte Sicherungselement 52 gehalten, das sich an einem zweiten Absatz 78 des zweiten Grundkörpers 40 abstützt.

Sowohl die Anschlusseinheit 10 als auch die Anschlusseinheit 50 weisen jeweils ein beim Zusammenstecken der Kupplungselemente'2, 4 vorzugsweise automatisch betätigbares Ventil 80, 90 auf, mit jeweils einem Ventilkörper 82, 92, der auf seiner Außenseite eine Nut für ein Dichtmittel 84, 94 aufweist, das im geschlossenen Zustand des Ventils 80, 90 in Anlage an einem von dem Verbindungsabschnitt 16, 56 ausgebildeten Ventilsitz ist, beispielsweise einer kegelförmigen Fläche. Der Ventilkörper 82, 92 ist an einer zylindrischen Innenfläche 86,96 des Verbindungsabschnitts 16, 56 geführt. Der Ventilkörper 82, 92 ist mittels eines Federelements 88, 98, das sich an einem Absatz des Anschlussabschnitts 14, 54 abstützt, in Vorspannung auf den geschlossenen Zustand gehalten.

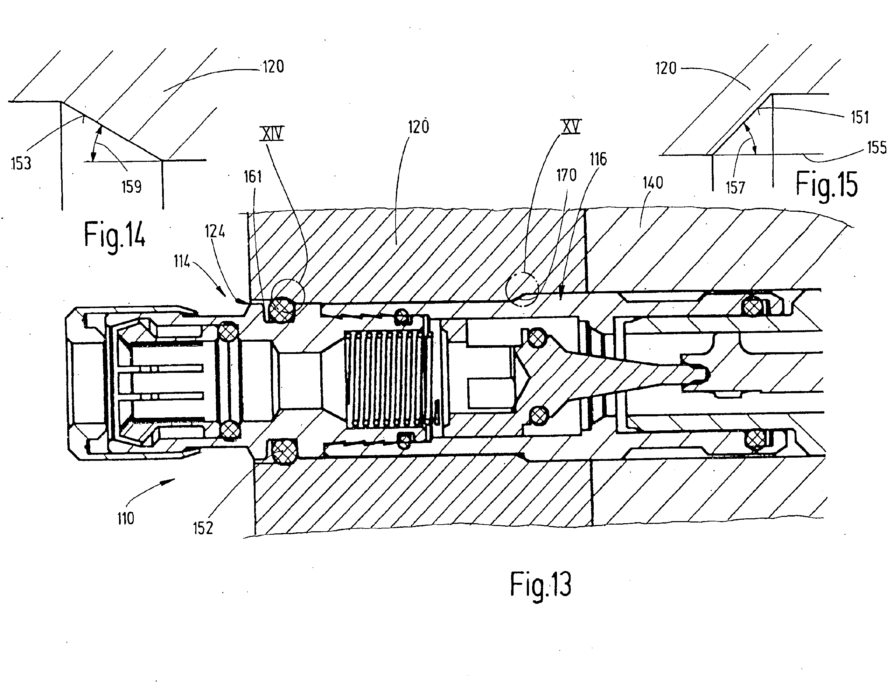

Die Fig. 13 zeigt einen Schnitt durch ein weiteres Ausführungsbeispiel einer Anschlusseinheit 110, die in den ausschnittsweise dargestellten ersten Grundkörper 120 eingesetzt ist. Am rechten Bildrand ist außerdem ausschnittsweise der zweite Grundkörper 140 mit einer darin eingesetzten Anschlusseinheit dargestellt. Die Fig. 14 zeigt in vergrößerter Darstellung den Ausschnitt XIV der Fig. 13, und die Fig. 15 zeigt in vergrößerter Darstellung den Ausschnitt XV der Fig. 13, wobei jeweils nur der Grundkörper 120 mit den Fasen 151, 153 dargestellt ist.

Die Anschlusseinheit 110 ist von der dem anzuschließenden Leitungsabschnitt abgewandten Seite, in der Darstellung der Fig. 13 von der rechten Seite, in den ersten Grundkörper 120 eingesetzt, bis eine ringförmige Schulter 170 des Verbindungsabschnitts 116 in Anlage an eine von dem Grundkörper 120 ausgebildete erste Fase 151 kommt, die mit der Längsrichtung 155 des ersten Grundkörpers 120 einen ersten Winkel 157 von im Ausführungsbeispiel 45° einschließt. Die ringförmige Schulter 170 bildet hierzu einen bezogen auf die Längsrichtung 155 des ersten Grundkörpers 120 mindestens abschnittsweise rechtwinkligen Absatz, kann aber mindestens abschnittsweise auch eine Fase aufweisen, deren Winkel mit dem der ersten Fase 151 übereinstimmen kann.

Der Anschlussabschnitt 114 der Anschlusseinheit 110 weist eine ringförmige Nut 161 auf, in welche das Sicherungselement 152 eingesetzt ist, insbesondere ein sogenannter O-Ring. Die Längserstreckung der Nut 161 entlang der Längsrichtung 155 ist dabei um mehr als 10 %, insbesondere mehr als 15 % größer als die Erstreckung des Sicherungselements 152 im unverformten Zustand. Das Sicherungselement 152 ragt im unverformten Zustand in radialer Richtung über die an die Nut 161 angrenzenden Abschnitte des Anschlussabschnitts hinaus, so dass in dem in der Fig. 13 dargestellten Zustand das Sicherungselement 152 in einen Hinterschnitt der Durchgangsbohrung 124 des ersten Grundkörpers 120 federelastisch eingreift oder einrastet. Der Hinterschnitt ist durch eine Stufe in der Durchgangsbohrung 124 gebildet, die eine zweite Fase 153 aufweist, die mit der Längsrichtung 155 des ersten Grundkörpers 120 einen zweiten Winkel 159 von im Ausführungsbeispiel 30° einschließt. Dadurch kann die Anschlusseinheit 110 bei Bedarf werkzeuglos aus dem ersten Grundkörper 120 entnommen werden.

## Patentansprüche

1. Anschlusseinheit (10) für eine Vorrichtung (1), insbesondere für eine Mehrfachkupplung, zum steckbaren Verbinden von mehreren ersten Leitungsabschnitten (12) mit jeweils mindestens einem zweiten Leitungsabschnitt (22) durch Zusammenstecken eines ersten Kuppl ungselements (2), an dem die ersten Leitungsabschnitte (12) angeschlossen sind, mit einem zweiten Kupplungselement (4), an dem die zweiten Leitungsabschnitte (22) angeschlossen sind, wobei die Anschlusseinheit (10) in eine Aufnahmeöffnung (24) eines Grundkörpers (20) des ersten Kupplungselements (2) der Vorrichtung (1) einsetzbar ist, **dadurch gekennzeichnet, dass** die Anschlusseinheit (10) sowohl einen Anschlussabschnitt (14) für den Anschluss des zugehörigen ersten Leitungsabschnitts (12) als auch einen Verbindungsabschnitt (16) zum Verbinden mit dem zweiten Kuppl ungselement (4) aufweist.

2. Anschlusseinheit (10) nach Anspruch 1, **dadurch gekennzeichnet, dass** Anschlusseinheiten (10, 10A) für unterschiedliche Abmessungen der ersten Leitungsabschnitte (12) wahlweise in die eine oder in die andere Aufnahmeöffnung (24) des Grundkörpers (20) einsetzbar sind.

3. Anschlusseinheit (10) nach Anspruch 1 oder einem der vorgenannten Ansprüche, **dadurch gekennzeichnet, dass** Anschlusseinheiten (10, 10A) für unterschiedliche Abmessungen der ersten Leitungsabschnitte (12) mindestens abschnittsweise, insbesondere im Verbindungsabschnitt (16), übereinstimmende Außenabmessungen aufweisen.

4. Anschlusseinheit (10) nach Anspruch 1 oder einem der vorgenannten Ansprüche, **dadurch gekennzeichnet, dass** der Anschlussabschnitt (14) und der Verbindungsabschnitt (16) durch separate Elemente gebildet sind, die fest und vorzugsweise fluiddicht miteinander verbunden sind, insbesondere miteinander verschraubt sind.

5. Anschlusseinheit (10) nach Anspruch 1 oder einem der vorgenannten Ansprüche, **dadurch gekennzeichnet, dass** die Anschlusseinheit (10), insbesondere im Verbindungsabschnitt (16), auf ihrer Außenumfangsfläche abschnittsweise eine von der Zylinderform abweichende Form aufweist, insbesondere eine umlaufende Nut (18), mittels welcher die Anschlusseinheit (10) in dem Grundkörper (2) fixierbar ist.

6. Anschlusseinheit (10) nach Anspruch 1 oder einem der vorgenannten Ansprüche, **dadurch gekennzeichnet, dass** der Anschlussabschnitt (14) eine Aufnahmeöffnung für eine den zugehörigen Leitungsabschnitt (12) lösbar fixierende Einrichtung (68) aufweist, insbesondere für eine in die Aufnahmeöffnung einsetzbare spannzange.

7. Anschlusseinheit (10) nach Anspruch 1 oder einem der vorgenannten Ansprüche, **dadurch gekennzeichnet, dass** die Anschlusseinheit (10) ein beim Zusammenstecken der Kupplungselemente (2, 4) vorzugsweise automatisch betätigbares Ventil (80) aufweist.

8. Vorrichtung (1), insbesondere Mehrfachkupplung, zum gleichzeitigen Steckverbinden von mehreren ersten Leitungsabschnitten (12) mit jeweils mindestens einem zweiten Leitungsabschnitt (22) durch Zusammenstecken eines ersten Kupplungselements (2), an dem die ersten Leitungsabschnitte (12) angeschlossen sind, mit einem zweiten Kupplungselement (4), an dem die zweiten Leitungsabschnitte (22) angeschlossen sind, wobei mindestens das erste Kupplungselement (2) einen Grundkörper (20) mit Durchgangsöffnungen (24, 26) aufweist, **dadurch gekennzeichnet, dass** mindestens in einen Teil der Durchgangsöffnungen (24) Anschlusseinheiten (10) einsetzbar sind, die sowohl einen Anschlussabschnitt (14) für den Anschluss des zugehörigen ersten Leitungsabschnitts (12) als auch einen Verbindungsabschnitt (16) zum Verbinden mit dem zweiten Kupplungselement (4) aufweisen.

9. Vorrichtung (1) nach Anspruch 8, **dadurch gekennzeichnet, dass** der Grundkörper (20) in der Durchgängsöffnung (24) einen ersten Absatz (72) aufweist, an dem die eingesetzte Anschlusseinheit (10) in Anlage ist und dadurch die axiale Position der Anschlusseinheit (10) in dem Grundkörper (20) definiert ist.

10. Vorrichtung (1) nach Anspruch 8 oder 9, **dadurch gekennzeichnet, dass** der Grundkörper (20) in der Durchgangsöffnung (24) einen zweiten Absatz (74) aufweist, an dem ein die Anschlusseinheit (10) in axialer Richtung fixierendes Sicherungselement (28) in Anlage ist.

11. Vorrichtung (1) nach Anspruch 8 oder einem der Ansprüche 8 bis 10, **dadurch gekennzeichnet, dass** in den Grundkörper (2) Arfschlusseinheiten (10, 30) für mindestens zwei unterschiedliche Medien einsetzbar sind, beispielsweise für Druckluft und elektrische Leitungen, insbesondere Sensorleitungen.
